(19) Europäisches Patentamt

European Patent Office

Office européen des brevets

(11) Publication number : **0 528 637 A1**

(12) # EUROPEAN PATENT APPLICATION

(21) Application number : **92307405.8**

(22) Date of filing : **13.08.92**

(51) Int. Cl.⁵ : **D07B 1/06**

(30) Priority : **16.08.91 JP 231180/91**

(43) Date of publication of application :
**24.02.93 Bulletin 93/08**

(84) Designated Contracting States :
**DE FR GB**

(71) Applicant : **SUMITOMO RUBBER INDUSTRIES LIMITED**
**1-1 Tsutsuicho 1-chome Chuo-ku**
**Kobe-shi Hyogo-ken (JP)**

(72) Inventor : **Kawamura, Kazuhiko**
**3-16 Higashi-asagirioka**
**Akashi-shi, Hyogo-ken (JP)**
Inventor : **Komatsuki, Masato**
**1-23 Hinokuchicho 1-chome**
**Nishinomiya-shi, Hyogo-ken (JP)**

(74) Representative : **Stewart, Charles Geoffrey**
**SP TYRES UK LIMITED Tyre Technical**
**Division**
**Fort Dunlop, Erdington, Birmingham B24 9QT**
**(GB)**

(54) **Metallic cord.**

(57)   A metallic cord which is composed of three strands (2) compactly twisted together to have a 1X3 structure, each strand being a metallic monofilament, the three strands having two different diameters (d1 and d2), the small diameter (d2) being in the range of 50 to 95% of the large diameter (d1), at least one of the three strands being waved, and at least one of the remaining two strands being not waved.

*Fig.3*

The present invention relates to a metallic cord, more particularly a tyre cord suitably used for tyre belts capable of improving tyre durability and running performance.

In general, for belt reinforcements in belted tyres, compact cords having a 1X3 structure, 1x4 structure or 1x5 structure in which steel filaments having the same diameter are compactly twisted together have been widely used.

Particularly, a 1x3 structure has been widely used for the resultant rigidity in the tyre derived from the triangular arrangement of the filaments in the cord.

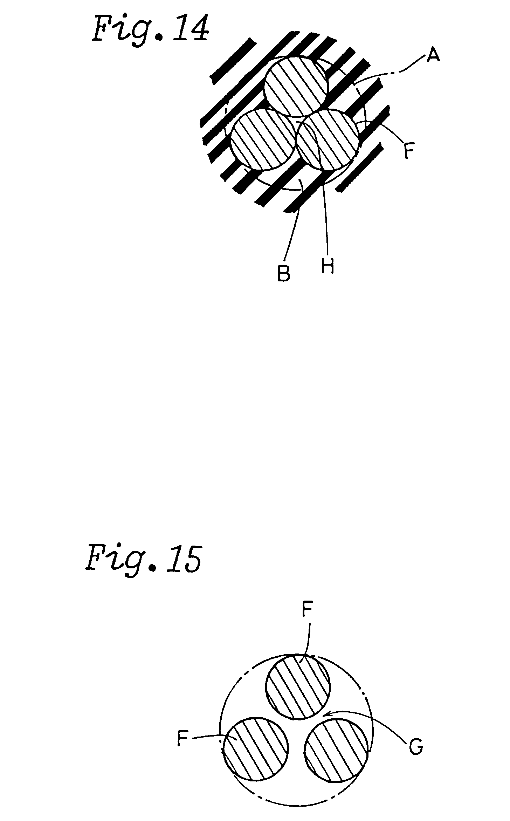

In such a compact cord, as shown in Fig.14, no gap is formed between the adjacent filaments F. Therefore, a closed space H is formed at the centre of the cord A and topping rubber B can not penetrate into this central space H. As a result, the central part of the surface of the filament is not covered by the topping rubber.

The uncovered part is easily corroded by any water which penetrates the tyre tread portion due to damage or penetration and then corrosion is liable to spread quickly through the space H, which greatly reduces the tyre durability.

In order to avoid such exposure of the steel filament surface, a loose or open cord structure has been proposed, wherein the steel filaments F are loosely twisted together, as shown in Fig.15. In such a cord, the penetration of topping rubber is improved and the surfaces of the filaments can be covered more easily by the topping rubber because, when the cord tension is small, the gaps between the filaments are sufficiently large for the topping rubber to easily penetrate the cord.

However, because of the very large elongation of such a loose cord under a small load, when such loose cords are assembled in a raw tyre to provide a belt and the tyre inside is pressurised in the vulcanising process, the belt tends to be elongated or deformed unevenly, which results in poor finished tyre uniformity and also a belt rigidity which is decreased in the finished tyre.

As a result, steering stability, rolling resistance, tyre life and the like are greatly decreased.

Furthermore, if tension is applied to the loose cord during rubberising of the cord, the gaps between the filaments becomes narrow or closed, which then causes the same problem of poor or non-existent rubber penetration as in the original closed cord case.

Such loose or open cords have been proposed, for example, in Japanese patent publication JP-A-55-90692, wherein a metallic cord is composed of filaments having the same diameter loosely twisted together such that the diameter D1 of the cord is 1.06 to 1.20 times a diameter D2 which is obtained if the filaments are compactly twisted together.

Further, Japanese patent publication JP-A-63-42985 discloses a metallic cord, in which three filaments having the same diameter (d) are loosely twisted together such that the distances between the central points of the filaments have a maximum (Lmax) and a minimum (Lmin) satisfying the following conditions :

$$Lmax \geqq 1.05d$$
$$Lmin \geqq d$$
$$Lmax/Lmin \geqq 1.05$$

On the other hand, in a 1x3 structure in which filaments having the same diameter are compactly twisted, a stable and rigid triangular arrangement is formed as mentioned above. Accordingly, the bending rigidity of the cord is very high in comparison with other 1X2, 1X4, 1X5 structures and the like, but the resistance to bending fatigue is liable to decreased.

In Japanese patent publication JP-A-60-189604, a steel cord of a 1X3, 1X4 or 1X5 structure is disclosed, in which filaments having at least two different diameters can be twisted compactly or loosely, the diameters are in the range of 0.20 to 0.28 mm, and the small diameter is 0.92 to 0.75 times the large diameter. Therefore, when such three filaments are compactly twisted, the resistance to bending fatigue will be improved, but the problem of rubber penetration remains unsolved.

Further, in Japanese patent publication JP-A-2-269884, a 1X3 steel cord is disclosed, in which three filaments have three different diameters in the range of 0.10 to 0.40 mm, the smallest diameter is 0.31 to 0.50 times the largest diameter, and the middle diameter is 0.55 to 0.73 times the largest diameter.

In this structure, however, a triangular structure is greatly destroyed, and the cord strength and fatigue resistance are liable to be decreased.

It is therefore, an object of the present invention to provide a metallic cord suitably used for tyre belts, which is capable of improving tyre durability and running performance.

According to one aspect of the present invention, a metallic cord is composed of three strands (2) to have a 1X3 structure, the three strands being a first metallic monofilament having a large diameter (d1), a second metallic monofilament having a small diameter (d2) of 0.5 to 0.95 times the large diameter (d1), and a third metallic monofilament, at least one of the three strands being waved, at least one of the remaining two strands being not waved, and the three strands being compactly twisted together.

Preferably, the diameters (d1, d2) are in the range of 0.15 to 0.35 mm.

By compactly twisting at least one waved strand and at least one unwaved strand, opened parts and closed parts are alternately formed along the length of the cord, and penetration of the topping rubber is effectively improved without increasing the initial elongation of the cord in a small load range.

By including at least one strand having a smaller diameter and setting the small diameter (d2) in the range of 0.5 to 0.95 times the large diameter (d1), the balance of the triangular arrangement is appropriately disturbed. As a result, the bending rigidity is slightly decreased, and the resistance to bending fatigue is improved without decreasing the tensile strength and fatigue resistance.

Therefore, when the metallic cord is used for tyre tread reinforcing belts, the durability of the belt is increased and the reinforcing effect and hooping effect of the belt are increased to improve tyre durability and running performance of the tyre such as steering stability, rolling resistance, uniformity and the like.

Embodiments of the present invention will now be described in detail in conjunction with the accompanying drawings, in which:

Fig.1 is a side view of a straight metallic monofilament for the unwaved strand;

Fig.2 is a side view of a waved metallic monofilament for the waved strand;

Fig.3 is a perspective view of an embodiment of the present invention;

Fig.4 is a cross sectional view of an opened part thereof;

Fig.5 is a cross sectional view of a closed part thereof;

Figs.6-12 are cross sectional views each showing another embodiment of the present invention;

Fig.13 is a cross sectional view a tyre;

Fig.14 is a cross sectional view showing a conventional compact cord;

Fig.15 is a cross sectional view showing a conventional loose cord.

In the figures, metallic cord 1 is composed of three strands 2 to have a 1X3 cord structure, wherein at least one of the three strands is waved, and at least one of the remaining two strands is not waved.

The three strands 2 are compactly twisted in a direction together, while each strand is provided with a strand twist in the reverse direction, thereby alternately forming opened parts and closed parts along the cord length.

The gap G between the waved strand and the adjacent strand is not more than 0.6 times the diameter of the waved strand.

Each of the three strands 2 is a metallic monofilament having a diameter in the range of 0.15 to 0.35 mm, more preferably, 0.2 to 0.3 mm.

The three strands have two different diameters, in which the small diameter (d2) is in the range of 95 to 50% of the large diameter (d1), more preferably in the range of 90 to 60 %.

For the metallic monofilaments, steel monofilaments are generally used in tyre belts, but an alloy of steel and nickel, an alloy of copper and other, and the like can be used.

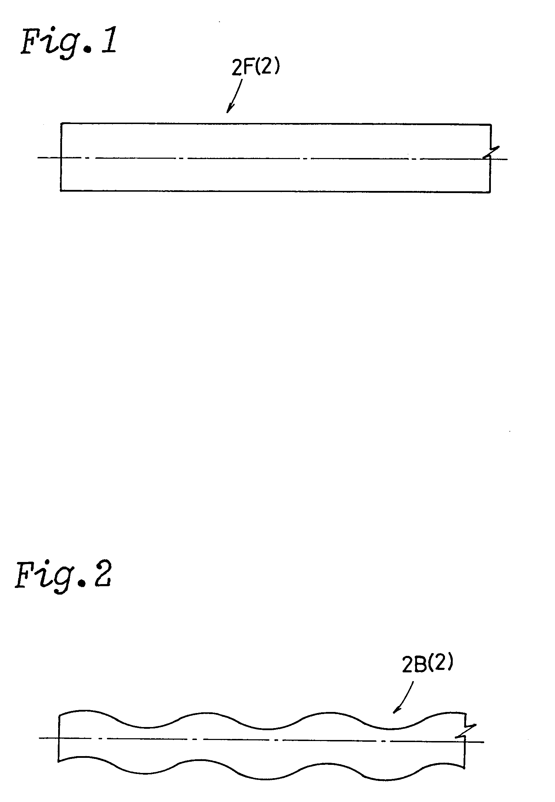

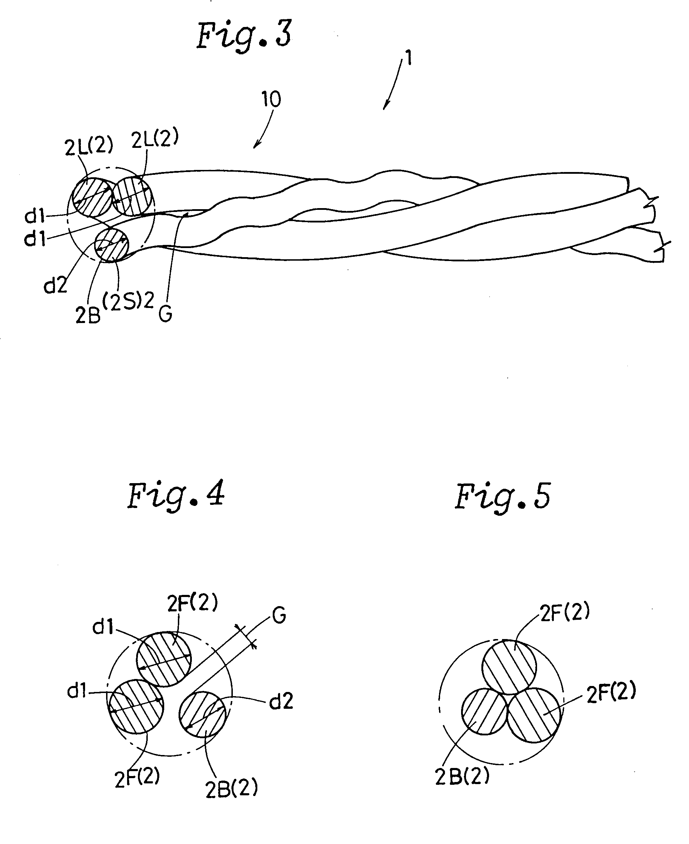

In the untwisted condition, the material monofilament for the unwaved strand 2F is straight as shown in Fig.1, and the material monofilament 2B for the waved strand 2B is waved as shown in Fig.2.

Such a wavy configuration is provided by coiling or bending a straight monofilament.

The wave pitches are in the range of 30 to 70 % of the cable twist pitch or the pitch of the twist of the finished cord 1.

The wave height (peak to peak) is in the range of 150 to 250 % of the diameter of the material monofilament 2B.

If the diameters of the strands 2 are less than 0. 15 mm, the strength and durability of the cord are insufficient.

If the diameters are more than 0.35 mm, resistance to bending deformation of the strands is reduced, and the fatigue resistance of the cord is decreased.

If the wave pitches are smaller than 30%, the resistance to fatigue of the cord is decreased by the remained strain.

If the wave pitches are larger than 70%, the number of the opened parts and the strand gap are decreased, and rubber penetration into the cord is reduced.

If the wave height is smaller than 150%, the strand gap is decreased, and rubber penetration into the cord is reduced.

If the wave height is larger than 250%, balance of the stress among the three strands is greatly disturbed, and the fatigue resistance and cord strength are liable to be impaired.

In the figures, to show the particulars of the strands 2, the following references are used.

2F: unwaved strand

2B: waved strand

2L: strand having the large diameter d1

2S: strand having the small diameter d2

In a first embodiment shown in Figs. 3, 4 and 5, two strands 2 having the large diameter (d1) are not waved, and the remaining one strand 2 having the small diameter (d2) is waved.

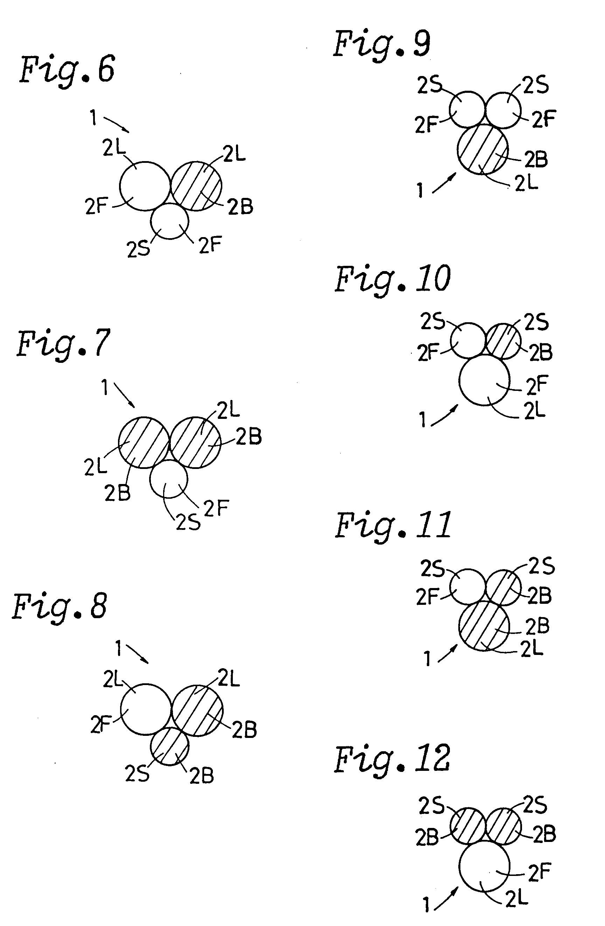

Accordingly, in the opened parts, a gap G is formed between the waved strand 2B and each of the adjacent strands 2F as shown in Fig.4. However, in the closed parts, no gap is formed between the three strands 2B and 2F.

Figs.6-8 show other embodiments of the present invention in which a cord 1 is composed of two strands (2L) having the large diameter and one strand (2S) having the small diameter.

In Fig.6, one of the two strands having the large diameter is waved and the remaining strands are not waved.

In Fig.7, the two strands having the large diameter are waved and the strand having the small diameter is not waved.

In Fig.8, the strand having the small diameter is waved, and one of the two strands having the large diameter is also waved, but the other is not waved.

Figs.9-12 show further embodiments of the present invention in which a cord 1 is composed of one strand (2L) having the large diameter and two strands (2S) having the small diameter.

In Fig.9, the strand having the large diameter is waved, but the two strands having the small diameter are not waved.

In Fig.10, the strand having the large diameter is not waved, and one of the two strands having the small diameter is waved, but the other is not waved.

In Fig.11, the strand having the large diameter is waved, and one of the two strands having the small diameter is also waved, but the other is not waved.

In Fig.12, the strand having the large diameter is not waved, but the two strands having the small diameter are waved.

Test cords (Example cords 1-4 and Reference cords 1-4) were made and tested. The specifications thereof are given in Table 1.

Using the test cords as tyre belt cords, test tyres were made, and rubber penetration, corrosion resistance and cut resistance of the test cords, and steering stability and ride comfort of the test tyres were evaluated. The test results are also given in Table 1.

(1) Penetration of the topping rubber into the belt cord was measured as follows:

Four belt cords were taken from the test tyre.

For each of the four belt cords, one of the three steel monofilaments therein was separated from the two others carefully so as not to remove the penetrated rubber using a sharp edged tool, and then the inner surfaces of the remaining two steel monofilaments were observed to determine whether the inner surfaces were exposed or not. Such determination was made every cord twisting pitch.

If the surface was exposed, then the topping rubber had not penetrated the part (pitch).

For each of the belt cords, the percentage of the penetrated parts (twist pitches) was calculated from the following equation:

$$\frac{\text{the number of the penetrated pitches} \times 100}{\text{the whole number of the pitches included in the cord}}$$

From the calculated four values in each test tyre, the mean value thereof was obtained as the rubber penetration index for the tyre.

(2) The resistance to corrosion of the steel belt cords of each of the test tyres was measured as follows:

Eight holes reaching to the radially outer belt were made in the inside of the test tyre, and some salt water was put into the tyre cavity. Then the tyre was run for 30,000 km at a speed of 60 km/h under 120% of the tyre load specified in JIS. After the 30,000 km test, the area of the corroded part of the radially outer belt was measured as the resistance to corrosion, and indicated by an index based on that Reference tyre 2 is 100. Therefore, the smaller the index, the better the resistance.

(3) The cut resistance was evaluated by the cut caused by sharp cornering of the test car. In Table 1, the cut resistance is indicated by an index based on that Reference tyre 2 is 100. The large the index, the better the resistance.

(4) The steering stability and ride comfort were evaluated by a test driver into five ranks, wherein the rank three is standard. The larger the value, the better the performance.

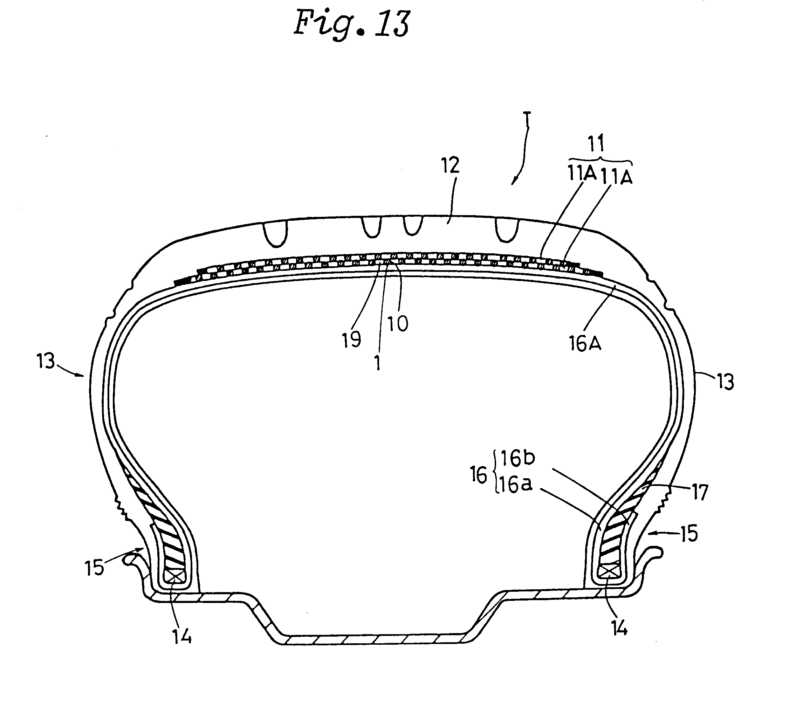

Fig.13 shows the radial tyre T used in the above-mentioned tests.

The tyre T comprises a tread portion 12, sidewall portions 13, bead portions 15 provided with a bead core 14, a carcass 16 turned up around the bead cores 14, a bead apex 17 made of a hard rubber disposed between the carcass main portion 16a and each turned up portion 16b, and a belt 11 disposed radially outside the carcass 16 and inside the tread portion 12.

The cords (Ex.1-4 and Ref.1-4) were embedded in a topping rubber in parallel with each other to form a belt ply 11A, and then, using two belt plies 11A, the cross ply belt 11 was formed.

TABLE 1

| | Ref.1 | Ref.2 | Ref.3 | Ex.1 | Ex.2 | Ex.3 | Ex.4 |
|---|---|---|---|---|---|---|---|
| Cord twist | compact | compact | loose | compact | compact | compact | compact |
| Number of monofilament | 5 | 3 | 3 | 3 | 3 | 3 | 3 |
| Larger diameter d1 (mm) | 0.23 | 0.28 | 0.28 | 0.28 | 0.28 | 0.28 | 0.28 |
| Number of monofilament | 5 | 3 | 3 | 2 | 2 | 2 | 1 |
| Smaller diameter d2 (mm) | -- | -- | -- | 0.15 | 0.20 | 0.25 | 0.25 |
| Number of monofilament | -- | -- | -- | 1 | 1 | 1 | 2 |
| Number of waved monofilament | 0 | 0 | 0 | 1 | 1 | 1 | 1 |
| Diameter | -- | -- | -- | d2 | d2 | d2 | d2 |
| Belt cord count/5cm | 37 | 42 | 42 | 55 | 50 | 45 | 49 |
| Rubber penetration | 0 | 10 | 85 | 100 | 95 | 95 | 95 |
| Total weight of belt cords/a tire (g) | 750 | 650 | 660 | 649 | 647 | 649 | 656 |
| Corrosion resistance | 120 | 100 | 25 | 15 | 20 | 20 | 20 |
| Cut resistance | 125 | 100 | 105 | 80 | 90 | 100 | 95 |
| Steering stability | 3.2 | 3.2 | 2.8 | 2.8 | 2.9 | 3.0 | 2.9 |
| Ride comfort | 2.8 | 3.0 | 3.2 | 3.2 | 3.1 | 3.0 | 3.1 |

## Claims

1. A metallic cord (1) composed of three strands (2) compactly twisted together, each of the three strands (2) being a metallic monofilament, characterised by the three strands (2L, 2S) having two different diameters (d1 and d2), the small diameter (d2) being in the range of 50 to 95% of the large diameter (d1), at least one of the three strands (2B) being waved, and at least one of the remaining two strands (2F) being not waved.

2. A metallic cord according to claim 1, characterised in that the diameters (d1, d2) are in the range of 0.15 to 0.35 mm.

3. A metallic cord according to claim 1 or 2, characterised in that the metallic monofilament for each waved strand (2B) is coiled so as to have a wavy configuration such that the wave pitches are in the range of 30 to 70% of the twist pitch of the cord, and the wave height (peak to peak) is in the range of 150 to 250% of the diameter of the monofilament.

4. A metallic cord according to claim 1, 2 or 3, characterised in that two strands (2L) have the large diameter (d1) and one strand (2S) has the small diameter (d2).

5. A metallic cord according to claim 4, characterised in that the two strands (2L) having the large diameter (d1) are not waved, and the strand (2S) having the small diameter (d2) is waved.

6. A metallic cord according to claim 4, characterised in that one of the two strands (2L) having the large diameter (d1) is waved and the remaining strands are not waved.

5

7. A metallic cord according to claim 4, characterised in that the two strands (2L) having the large diameter (d1) are waved and the strand (2S) having the small diameter (d2) is not waved.

8. A metallic cord according to claim 4, characterised in that the strand (2S) having the small diameter (d2) is waved, and one of the two strands (2L) having the large diameter (d1) is also waved, but the other is not waved.

9. A metallic cord according to claim 1, characterised in that one strand (2L) has the large diameter (d1) and two strands (2S) have the small diameter (d2).

10. A metallic cord according to claim 9, characterised in that the strand (2L) having the large diameter (d1) is waved, but the two strands (2S) having the small diameter (d2) are not waved.

11. A metallic cord according to claim 9, characterised in that the strand (2L) having the large diameter (d1) is not waved, and one of the two strands (2S) having the small diameter (d2) is waved, but the other is not waved.

12. A metallic cord according to claim 9, characterised in that the strand (2L) having the large diameter (d1) is waved, and one of the two (2S) strands having the small diameter (d2) is also waved, but the other is not waved.

13. A metallic cord according to claim 9, characterised in that the strand (2L) having the large diameter (d1) is not waved, but the two strands (2S) having the small diameter (d2) are waved.

**Fig. 1**

2F(2)

**Fig. 2**

2B(2)

# Fig.3

2L(2)  2L(2)

10

1

d1

d1

d2

2B (2S)2 G

# Fig.4

2F(2)

G

d1

d1

d2

2F(2)

2B(2)

# Fig.5

2F(2)

2F(2)

2B(2)

*Fig.6*

*Fig.9*

*Fig.7*

*Fig.10*

*Fig.8*

*Fig.11*

*Fig.12*

# Fig. 13

Fig.14

A

F

B

H

Fig.15

F

F

G

EP 0 528 637 A1

<table>
<tr><td colspan="5"><b>European Patent Office</b>     <b>EUROPEAN SEARCH REPORT</b>     Application Number<br>EP   92 30 7405</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 476 548 (UNIROYAL ENGLEBERT REIFEN GMBH)<br>* page 6, line 19 - page 7, line 2 *<br>* page 5, line 6 - line 19 *<br>--- | 1,2 | D07B1/06 |
| D,Y | PATENT ABSTRACTS OF JAPAN<br>vol. 10, no. 37 (M-453)(2094) 14 February 1986<br>& JP-A-60 189 604 ( KAWATETSU KOUSEN KOGYO K.K. ) 27 September 1985<br>* abstract * | 1 | |
| A | --- | 2,4,9 | |
| Y | EP-A-0 433 962 (TOKUSEN KOGYO COMPANY LTD.)<br>* page 3, line 54 - page 4, line 17 * | 1 | |
| A | --- | 2,3 | |
| A | US-A-4 738 096 (K.HATEKEYAMA; M.KUSUDA)<br>* column 3, line 13 - line 19 *<br>* column 3, line 27 - line 59 *<br>----- | 1,2 | TECHNICAL FIELDS SEARCHED (Int. Cl.5 )<br><br>D07B |

The present search report has been drawn up for all claims

| Place of search | Date of completion of the search | Examiner |
|---|---|---|
| THE HAGUE | 13 NOVEMBER 1992 | GOODALL C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12